# EUROPEAN PATENT SPECIFICATION

(11) **EP 0 657 764 B1**
(45) Date of publication and mention of the grant of the patent: **18.08.1999**
(21) Application number: 95200357.2
(22) Date of filing: 15.06.1990
(51) Int. Cl.: G02F 1/135

(54) **Photo-to-photo transducer**
Opto-optischer Wandler
Convertisseur opto-optique

(30) Priority: 16.06.1989 JP 15377389; 19.07.1989 JP 18447989; 29.11.1989 JP 31003389
(43) Date of publication of application: 14.06.1995
(62) Divisional of application: 90306574.6
(73) Proprietor: VICTOR COMPANY OF JAPAN LIMITED, Yokohama-Shi Kanagawa-Ken (JP)
(72) Inventor: Takanashi, Itsuo, Kamakura-Shi, Kanagawa-Ken (JP); Nakagaki, Shintaro, Kanagawa-Ken (JP); Asakura, Tsutou, Kanagawa-Ken (JP); Furuya, Masato, Kanagawa-Ken (JP); Suzuki, Tetsuji, Kanagawa-Ken (JP); Maeno, Keiichi, Ohta-Ku, Tokyo (JP)
(74) Representative: Crawford, Andrew Birkby

(56) References cited:
- US-A- 3 957 349
- JOURNAL OF APPLIED PHYSICS., vol.47, no.2, February 1976, NEW YORK US pages 584 - 590 L.M.FRAAS 'AC PHOTORESPONSE OF A LARGE-AREA....'

## Description

This invention relates to a photo-to-photo transducer (abbreviated to a PPC hereinafter) which transduces information carried by an electro-magnetic radiation beam such as light into some form applicable to an image pick-up apparatus, an optical projector or an optical computer. This invention also relates to an image pick-up apparatus comprising a PPC.

A video signal obtained by picking up an optical image of an object can be easily processed by such as editing, trimming and the like. Recording, reproducing and erasing the video signal also can be easily performed. These techniques have been widely used in various fields such as printing, electronic publishing, measuring and the like.

There has been an increased demand for an apparatus capable of imaging and recording an optical information such as a moving picture or an image with a higher resolution when compared to a conventional apparatus.

In order to reproduce images with high quality and resolution, it is necessary for an image pick-up apparatus to generate a video signal by which an image of high quality and resolution can be reproduced. However, an image pick-up apparatus using an image pick-up tube has a limit for minimizing the diameter of an electron beam, and also the target capacity thereof increases as its size becomes large, resulting in a poor resolution.

Furthermore, for high resolution moving images, the frequency band of a video signal becomes larger than several tens to hundreds MHz, thus posing a problem of poor S/N. The above problems have made it difficult to obtain video signal which can reproduce images of high quality and resolution.

As for a PPC capable of receiving an optical image of an object and emitting out the optical image applicable to optical parallel processing in an optical projector and an optical computer and image-recording, for example a space-modulation device such as a liquid crystal-type optical modulator, a photoconductive-Pockels effect-device and a microchannel-type optical modulator or a device made of a photochromic material have been remarked on.

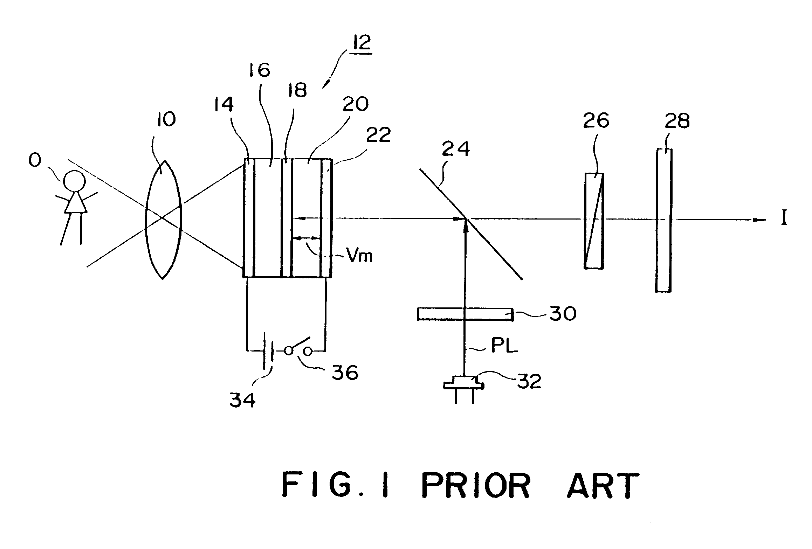

The assignee of this application has proposed an image pickup apparatus with high resolution employing the PPC which is shown in Fig. 1.

Throughout the drawings, like reference numerals and letters are used to designate like or equivalent elements for the sake of simplicity of explanation.

The image pickup apparatus shown in Fig. 1 comprises an imaging lens 10, a PPC 12, a beam splitter 24, a wave-plate 26, an analyzer 28, a polarizer 30 and a light source 32 such as a semiconductor laser.

The PPC 12 is composed of transparent electrodes 14 and 22, a photoconductive layer (abbreviated in a PCL) member 16, a dielectric mirror 18 and a photo-modulation layer (abbreviated in a PML) member 20 which is an optical member (such as a monocrystal of lithium niobate or a field effect nematic liquid crystal layer) for polarizing plane of light accordingly with the intensity of an applied electric field. A power supply 34 causes an electric field across the transparent electrodes 14 and 22 by turning on a switch 36. The PPC 12 is installed into a black box not shown so that the PCL member 16 is not unnecessary exposed to ambient light.

The transparent electrode 14 is composed of such as ITO (Indium-Tin Oxide) having spectral characteristic such that light having a wave-length carrying optical information to be photographed passes therethrough.

As for the PCL 16, a photoconductive material (such as amorphous silicon) having characteristic such that field intensity-distribution with high resolution is generated on a surface thereof when an optical image with high resolution is incident to the other surface thereof under an electric field with proper intensity.

In Fig. 1, light carrying an optical image of an object O is incident to the transparent electrode 14 through an imaging lens 10. The light passes through the transparent electrode 14 and is incident to the PCL member 16. The electric resistance of the PCL member 16 varies accordingly with the intensity of the light. The electric resistance of each portion of the PCL member 16 thus varies accordingly with the intensity of each portion of the object O.

The power supply 34 applies a specific voltage across the transparent electrodes 14 and 22 through the switch 36. Therefore, the electric field (a voltage Vm) with the field intensity corresponding to the optical image is applied across the PML member 20 which is provided so as to face the PCL member 16 through the dielectric mirror 18.

If the PML member 20 is composed of monocrystal of lithium niobate, the refractive index thereof varies with the electric field due to electro-optic effect. Therefore, in the PML member 20, the refractive index varies with the field intensity-distribution based on the impedance of the PCL member 16 varying accordingly with the optical image incident thereto.

A light Pl such as a laser beam emitted out from the light source 32 passes through the polarizer 30 and is reflected at the beam splitter 24, then is incident to the PML member 20 through the transparent electrode 22.

The electric field whose field intensity-distribution is varying accordingly with the optical image is generated across the PML member 20, so that the light Pl thus incident thereto is modulated accordingly with the optical image. The light P1 thus modulated is reflected at the dielectric mirror 18 and passes through the beam splitter 24, the wave-plate 26 and the analyzer 28, then is picked up as a reproduced image.

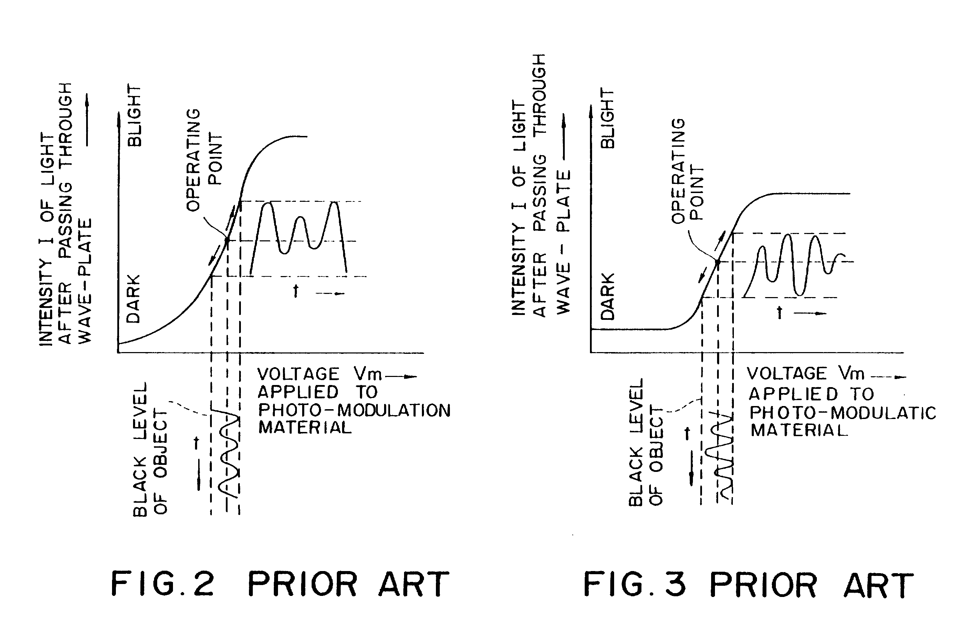

Fig. 2 shows the relationship between primary electro-optic effect and the voltage Vm applied to the PML member 20 (composed of such as monocrystal of lithium niobate LiNbO₃, Bismuth Silicon Oxide, Potassium dihydrogen phosphate and DKDP). The axis of ordinates denotes the intensity I of the light P1 after passing through the wave-plate 26 and the analyzer 28, and the abscissa denotes the voltage Vm applied to the PML member 20. Fig. 3 shows the same relationship as that shown in Fig. 2. In this case, the PML member 20 is made of field effect nematic liquid crystal.

Each of the waveforms shown in Figs. 2 and 3 with time base in an ordinates direction is the voltage applied to the PML member 20 accordingly with the optical image of the object O. While each of those in an abscissa direction is the light emitted out from the analyzer 28, whose intensity is varying with the voltage in the ordinates direction.

As is understood from Figs. 2 and 3, setting the operating point of the PML member 20 is done by adjustment of the wave-plate 26 or reorientation of the analyzer 28, so that black level of the optical information of the optical image of the object O is reproduced as it is.

However, in the case of employing scattering-type liquid crystal or PLZT (Lead Lanthanum Zirconate Titanate) of scattering-mode as the PML member 20, the operating point thereof cannot be set by adjustment of the wave-plate 26 or reorientation of the analyzer 28.

Furthermore, the image pickup apparatus proposed by the assignee of this application requires the analyzer 28 so that utility-efficiency of light is inevitably lowered or shading occurs.

Moreover, when a twisted-nematic liquid crystal or other electro-optic liquid crystal having double refraction characteristic is employed as the PML member 20, utility-efficiency of light is substantially lowered when the light Pl is incident to the PML member from the direction other than a normal line on the surface of the PML member 20 since photo-modulation therein depends on the direction of an optical axis of the liquid crystal.

Therefore, incidence direction of the light Pl to the PML member 20 is set in normal-direction. Optical members such as a semi-transparent mirror and a deflection-beam splitter are thus provided along with an optical passage so as to separate the light Pl incident to the PPC 12 is reflection type.

When a twisted-nematic liquid crystal layer is employed as the PML member 20, complex process is required, that is, a twisted-nematic liquid crystal is injected into a cell made with spacers. Furthermore, when a large PPC is produced, it is difficult to compose a PML by means of a twisted-nematic liquid crystal layer with uniform thickness. Moreover, when a monocrystal of lithium niobate or other solid state component is employed as the PML member 20, a high electric field (or a voltage) is required for obtaining a desired electro-optic effect and the PPC 12 must be handled very carefully.

When the PPC 12 is composed flat, complex deflection-optical system such as a doublet spatial lens is required for writing image information on the entire surface of the PPC 12.

United States patent US-A-3,957,349 describes a method of operating an electro-optic device having a photoconductive layer and a liquid crystalline layer, comprising the steps of
applying a voltage at a rate which maintains the voltage across the liquid crystalline layer at a value less than the threshold value of voltage to which the liquid crystalline layer responds, imaging the device in the conventional manner, and, optionally, decreasing the applied voltage at a rate which maintains the voltage across the liquid crystalline layer at a value less than the threshold value of voltage to which the liquid crystalline layer responds.

An article entitled "Optically Controllable Transparencies based on Structures Consisting of a Photoconductor and a Polymer-Encapsulated Nematic Liquid Crystal" (Sov. Tech. Phys. Lett., Vol. 14, No. 1, January 1988; O.A. Afonin et al) describes experiments into the above and notes that the voltage-contrast characteristic of the structures studied exhibit a well-defined unipolar nature.

An article entitled "Photoactivated Liquid Crystal Light Values" (1972 SID International Symposium Digest of Technical Papers, First Edition, June 1972, Lewis Winner, New York, N.Y., U.S.) by A.D. Jacobsen describes a cell having a voltage applied across a pair of electrodes between which are sandwiched layers of liquid crystal and photoconductive material, in which optical images may be instantaneously recorded.

An article entitled "ac Photoresponse of a large-area Imaging CdS/CdTe Heterojunction" (J.Appl. Phys., Vol. 47, No. 2., February 1976, American Institute of Physics; L.M. Fraas et al) describe a device similar to the above-referred to as a light-valve, having an arc voltage applied across the electrodes.

United States patent US-A-3,932,025 discloses an imaging system for forming a plurality of images on the same surface. The imaging system includes an electro-optic imaging member comprising a voltage or current-sensitive light modulating layer, a layer of photoconductive material which exhibits persistent photoconduction properties and a layer of material capable of generating photoinjection currents when struck by radiation which it absorbs. Across these layers is connected a source of electric potential, which it is said, may be ac., dc., or a combination of these.

European Patent Application EP0403307, of which the present application is a divisional application provides a method for operating a photo-to-photo transducer to set black level of information (an image) to be read at high contract ratio.

According to the present invention, there is disclosed a photo-to-photo transducer, comprising:
a first electrode through which an electromagnetic radiation beam for writing information is passed;
a photoconductive layer member whose impedance varies to generate electric charges under the presence of a specific voltage when the beam thus passed is incident thereto;
a photo-modulation layer member having an operation threshold level and performing photo-modulation subject to the electric charges in the vicinity of the threshold level when applied with the specific voltage corresponding to a black level of the electromagnetic beam for writing information;
a second electrode through which an electromagnetic radiation beam for reading the information to be subjected to the photo-modulation is passed, wherein the first electrode, photoconductive layer member, photo-modulation layer member and second electrode are laminated in order; and
means for applying a voltage corresponding to the black level of the electromagnetic beam for writing information across the first and second electrodes so that the specific voltage is applied to the photoconductive layer member and the photo-modulation layer member respectively.

There is further disclosed an image pick-up apparatus, comprising:
a photo-to-photo transducer composed by laminating a photoconductive layer member and a photo-modulation layer member having an operation threshold level between first and second transparent electrodes;
first projection means for projecting an electro-magnetic radiation beam for writing information onto the photoconductive layer member through the electrode at the side thereof, the impedance of the photo-conductive layer member varying to generate electric charges corresponding to the beam for writing information under a presence of a specific voltage; and
second projection means for projecting an electro-magnetic radiation beam for reading the information onto the photo-modulation layer member through the electrode at the side thereof, the photo-modulation layer member performing photo-modulation subject to the electric charges in the vicinity of the threshold level under the presence of when the specific voltage corresponding to a black level of the electromagnetic beam for writing information is applied thereto; and
second projection means for projecting an electro-magnetic radiation beam for reading the information onto the photo-modulation layer member through the electrode at the side thereof, the photo-modulation layer member performing photo-modulation subject to the electric charges in the vicinity of the threshold level when the specific voltage corresponding to a black level of the electromagnetic beam for writing information is applied thereto; and
means for applying a voltage across the first and second electrodes so that the specific voltage corresponding to the black level of the electromagnetic beam for writing information is applied to the photo-conductive layer member and the photo-modulation layer member respectively.

Other subjects and advantages of the present invention will become apparent from the detailed description to follow taken in conjunction with the appended claims.

### BRIEF DESCRIPTION OF THE DRAWINGS

Fig. 1 is a side sectional view of a conventional image pick-up apparatus employing a photo-to-photo transducer;
Figs. 2 and 3 are the characteristics for explaining the conventional image pick-up apparatus employing a photo-to-photo transducer;
Fig. 4 is a side sectional view of an image pick-up apparatus employing a photo-to-photo transducer according to the present invention;
Figs. 5 to 7 are the characteristics for explaining a method of operating a photo-to-photo transducer according to the present invention;
Figs. 8 to 11 and 14 to 17 are side sectional views of image pick-up apparatus according to the present invention;
Fig. 12 shows a timing chart for the explanation of photographing a moving picture;
Fig. 13 is a side sectional view of a photo-to-photo transducer for explaining the image pickup apparatus according to the present invention;
Figs. 18 to 24 and 25 to 30 are side sectional views of display apparatus according to the present invention;
Figs. 26 and 32 are side sectional views for explaining photo-to-photo transducers employed to the apparatus according to the present invention; and
Figs. 31 and 33 to 38 are side sectional views of the image pickup apparatus according to the present invention.

### DESCRIPTION OF THE PREFERRED EMBODIMENTS

The present invention will now be described in detail with reference to the accompanying drawings.

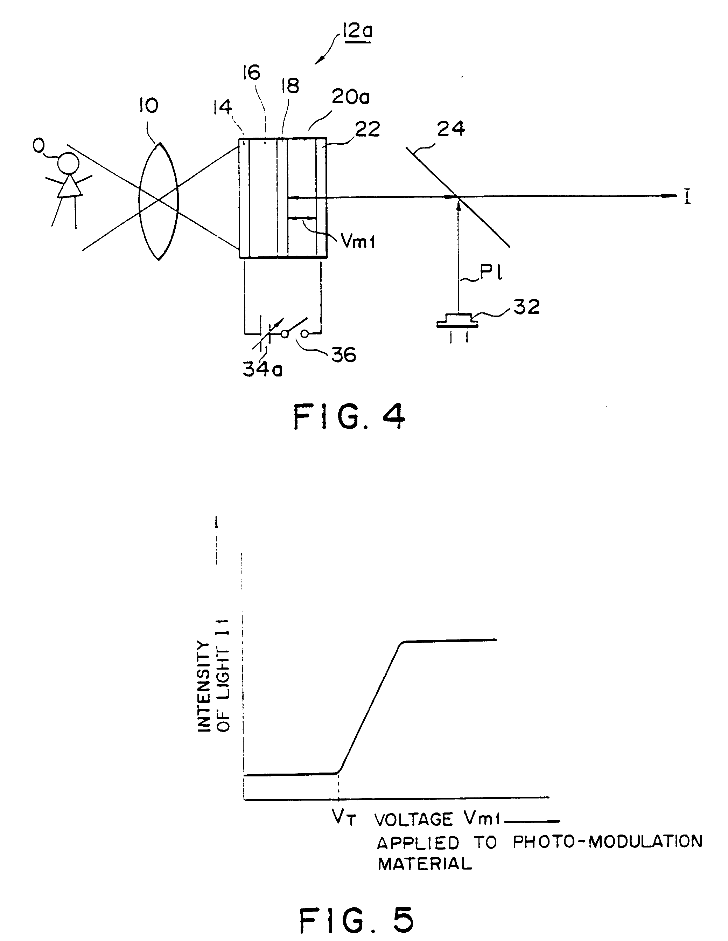

A photo-to-photo transducer 12a shown in Fig. 4 is provided with a PML member 20a composed of a liquid crystal layer of scattering-type, such as scattering-mode liquid crystals and PLZT instead of the PML member 20 shown in Fig. 1. There is further provided a variable power supply 34a. Compared to the conventional photo-to-photo transducer 12 shown in Fig. 1, a light Pl which is reflected at a dielectric mirror 18 and again passes through the PML member 20a can be read out, as it is, as a reproduced image.

Fig. 5 shows the characteristic of the PML member 20a, that is, a voltage Vm1 applied thereacross and intensity of light I₁ passing therethrough (being read out). There is existed a threshold voltage V_{T}, so that, the PML member 20a is operated when the voltage Vml exceeds the threshold voltage V_{T}.

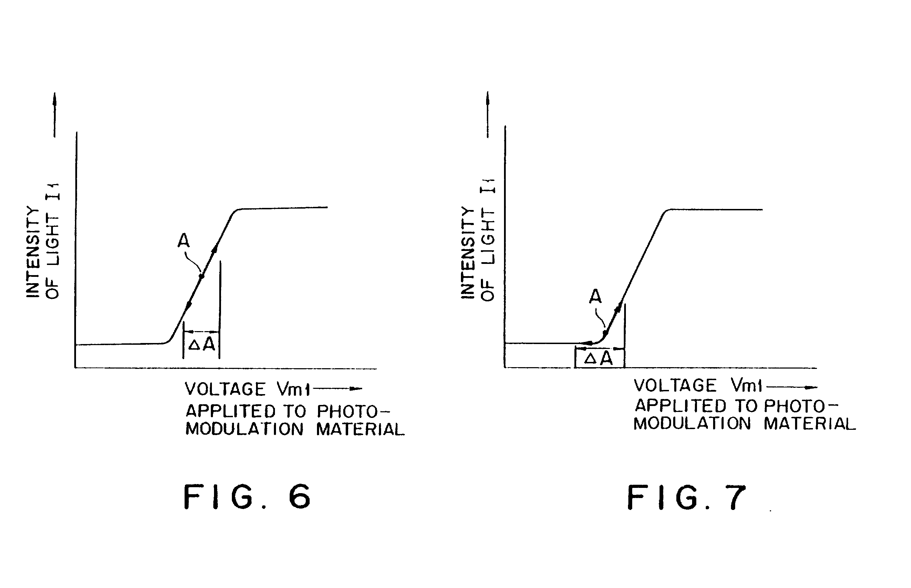

When an operating point of the PML member 20a is on the point A, as depicted in Fig. 6, by adjusting the thickness of layers of the PPC 12a, their impedance and the voltage applied across the transparent electrodes 14 and 22, black of signal component A (black level of an optical image of an object) cannot be reproduced as the black (the black level of optical information).

Accordingly, when this light, as it is, is photoelectrically converted into a video signal which is displayed on a monitor, only an image with small contrast ratio is obtained. Furthermore, an optical information as black of the optical image of the object and the black level of the video signal obtained by photoelectric conversion cannot be completely matched to each other.

Therefore, according to the present invention, as is depicted in Fig. 7, black of the signal component is adjusted below the threshold voltage V_{T}, that black can be reproduced in the reproduced information (reproduced image) as the black (the black level of the optical information) by varying the thickness of the layers of the PPC 12a, the voltage applied across the transparent electrodes 14 and 22 or composition of the PML member 20a to vary the operating point thereof. If the PML member 20a is composed of the composite membrane of macromolecule and liquid crystal, their mixing ratio is varied to change the characteristics of the PML member 20a.

The operating point can be determined by adjusting the voltage applied from the power supply 34a when a light carrying an optical image is incident to the PCL member 16 or combining a.c. and d.c. bias voltages. Furthermore, the operating point is also determined by providing a mesh electrode between the PCL and PML members 16 and 20a and applying a bias voltage across the mesh electrode and the transparent electrode 22.

As is described above, the black level of the read image information (reproduced image) can be read and reproduced with high contrast ratio by operating the PML member below the threshold voltage (or at its voltage or just above) in the photo-to-photo transducer employing the PML member of scattering-mode.

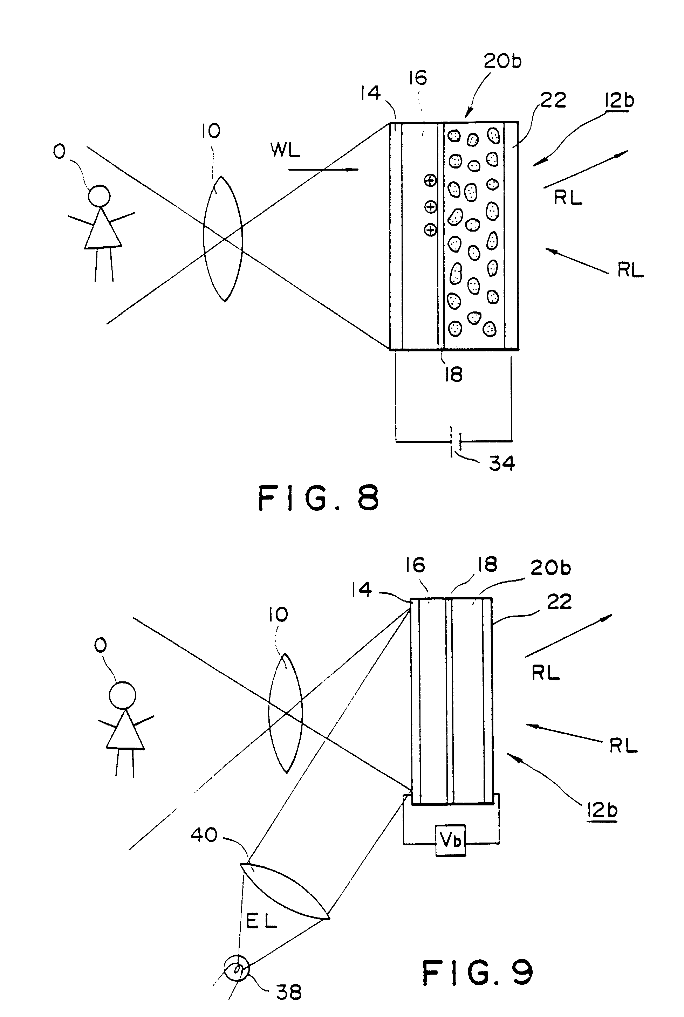

In Fig. 8, a PPC 12b is composed of a transparent electrode 14, a PCL member 16, a dielectric mirror 18, a PML member 20b composed of the composite membrane of macromolecule and liquid crystal in which high resistant liquid crystals are dispersed in macromolecular material and a transparent electrode 22, laminated each other in order. Each PPC 20b shown in Figs. 9 to 12 is also composed in the same configuration as described above.

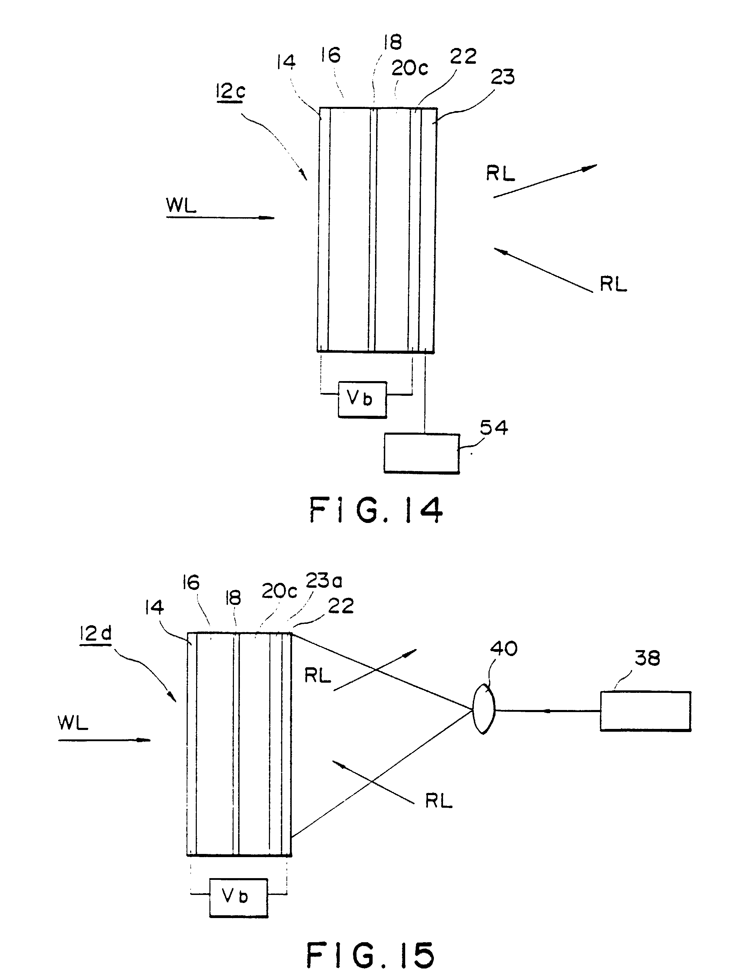

There is provided the dielectric mirror 18 between the PCL member 16 and the PML member 20b in Figs. 8 to 12. However, this dielectric mirror 18 can be omitted if the PCL member 16 is composed so as not to sense a light RL for reading and the light RL is reflected at there. The dielectric mirror 18 shown in Figs. 14 to 17 also can be omitted.

The composite membrane employed as the PML member 20b shown in Fig. 8 will be explained. The composite membrane is composed by scattering nematic liquid crystals which have characteristic as the liquid crystal at a room temperature and have high volume resistivity in the macromolecular material such as polyester resin, polycarbonate resin, vinyl chloride resin, polyamide resin, polyethylene resin, polypropylene resin, polystyrene resin and silicon resin, each having volume resistivity of 10¹⁴ Ω-cm or more.

Followings are the examples of production of the PPC 12b including the PML member 20b shown in Figs. 8 to 12 and 9.
(1) The nematic liquid crystal E-44 of three grams, manufactured by BDH Co., the UK is applied into ten % chloroform solution in PMMA (Polymethylmethacrylate) of twenty grams. The solution then is stirred and left alone.
   A glass plate, a surface thereof being coated with ITO (Indium-Tin Oxide)-membrane (not shown in Figs. 8 and 9) as the transparent electrode 22 is sufficiently washed. The chloroform solution in PMMA containing liquid crystals is applied onto the transparent electrode 22 by means of a bar coater to compose the PML member 20b of the composite membrane.
   As for the macromolecular material, other than PMMA, any macromolecular materials which can be dissolved into solution and applied onto anything as a membrane and also have high volume resistivity may be available. Such as polycarbonate and PEI (Polyether Imide) having better transparency are particularly available. This is also the same for the examples (2) and (3) described later.
   A compound composed by laminating the glass plate produced as above, the transparent electrode 22 and the PML member 20b with each other and a compound produced with process different from above, that is the compound composed by laminating a glass plate (not shown in Figs. 4 and 5), the transparent electrode 14 and PCL member 16 and the dielectric mirror 18 with each other are stucked with each other to form the PPC 12b shown in Figs. 8 and 9.
(2) Nematic liquid crystals LIXON 501 DML (or LIXON 5028) of three grams manufactured by Chisso Co. are applied onto ten weight % chloroform solution in PMMA of twenty grams. The solution then is stirred and left alone. Other procedures are the same as described in (1).
(3) Nematic liquid crystals ZLIEt22DMLDML exhibiting cybotaxis of three grams manufactured by Merck Japan Ltd. are applied onto ten weight % chloroform solution in PMMA of twenty grams. The solution then is stirred and left alone. Other procedures are the same as described in (1).

It is easy to form the composite membrane of macromolecular and liquid crystals so as to have thickness of the membrane in the range of 0.1 micron compared to the conventional PPC.

The liquid crystals contained in the PML member 20b produced as above are in the state that the crystals are confined to innumerable pores in the macromolecular materials. The pores are larger than those confining liquid crystals in the composite membrane of macromolecular and liquid crystals employed as a PML member 20c in PPCs 12c and 12d shown in Figs. 14 to 17, respectively.

The nematic liquid crystal used in (2) and (3) has such a high resistivity of 1 × 10¹³ Ω-cm. Therefore, image information with high resolution can be read/written by means of the PPC 12b including the PML member 20b composed of the macromolecular material with the volume resistivity of 1 × 10¹³ Ω-cm or more into which the liquid crystals are dispersed.

Furthermore, even if the electric field applied to the composite membrane employed as the PML member 20b is direct electric field, the resolution of the image information is not degraded as time elapse owing to high resistant liquid crystals (with low contamination of ions).

When the liquid crystal with low volume resistivity including many ions is used for the PML member 20b, the ions transfer due to the electric field applied thereto to lower the intensity of the electric field generated by charge image. Inclination of the optical axis of molecules of the liquid crystal is thus decreased to degrade the resolution of the charge image due to scattering of the electric field generated by the charge image.

However, the nematic liquid crystal used in (2) and (3) contains few ions so that undesirable phenomenon as described above does not occur. Therefore, reading/writing operation of the image information with high resolution can be performed.

In the image pickup apparatus shown in Fig. 8, when a voltage is applied across the transparent electrodes 14 and 22 by the power supply 34 and the optical image of the object O is projected onto the PCL member 16 of the PPC 12b through the imaging lens 10, the electric resistance of the PCL member 16 varies accordingly with the optical image. The charge image corresponding to the optical image is thus generated in the vicinity of the border of the PCL member 16 and the dielectric mirror 18.

This causes electric field whose intensity distribution corresponds to the charge distribution of the optical image to be applied to the PML member 20b. In the PML member 20b, the liquid crystal is reoriented due to the electric field. This results in an image generated in the PML member 20b, in which the reorientation of the liquid crystal corresponds to the optical image.

The image thus generated in the PML member 20b is maintained as it is as far as there is the charge image in the vicinity of the border of the PCL member 16 and the dielectric mirror 18.

As is already described, since high resistant liquid crystal is included in the PML member 20b, the resolution of the image is not degraded as time lapse, though the electric field applied to the PML member 20b is the direct electric field.

An a.c. power supply may be used instead of the power supply 34 in Fig. 8. However, writing operation described as above is not performed, so that writing and reading operations must be performed at the same time.

When the charge image thus generated in the vicinity of the border of the PCL member 16 and the dielectric mirror 18 is erased (the charge image is generated in the vicinity of the border of the PCL member 16 and the PML member 20b if the dielectric mirror 18 is omitted.), the electric field applied to the PML member 20b is also erased so that the liquid crystal contained in the PML member 20b exhibits isotropy. Therefore, image information cannot be read out even if a light RL is incident to the PML member 20b, that is, erasing operation is performed.

Accordingly, as to the erasing operation, it is enough to erase the charge image generated in the vicinity of the border of the PCL member 16 and the dielectric mirror 18. In order to erase the charge image, as is shown in Fig. 9, a light EL emitted out from a light source 38 for erasing operation is incident to the PPC 12b at the transparent electrode 14 side thereof through a lens 40 to lower the electric resistance of the PCL member 16. In the case of erasing operation, two transparent electrodes 14 and 22 may be short-circuited each other or grounded together.

As is described above with reference to Fig. 8, by way of writing operation, the charge image corresponding to the optical image of the object O is generated in the vicinity of the border of the PCL member 16 and the dielectric mirror 18 (or the border of the PCL member 16 and the PML member 20b if the dielectric mirror 18 is omitted), then the electric field generated by the charge image is applied to the PML member 20b.

When a light RL emitted out from a light source not shown is incident to the PPC 12b at the transparent electrode 22 side thereof, the light RL reaches the dielectric mirror 18 through the transparent electrode 22 and the PML member 20b. After reflected at the dielectric mirror, the light RL is emitted out from the PPC 12b at the transparent electrode 22 side thereof through the PML member 20b.

The intensity of the light RL thus emitted out from the PPC 12b varies accordingly with the electric field generated by the charge image.

That is, the liquid crystals are reoriented accordingly with the electric field applied thereto when the electric field whose intensity is varying accordingly with the charge distribution corresponding to the optical image of the object O is applied to the liquid crystals contained in the composite membrane employed as a PML member 20b.

The light RL reciprocally transferring in the PML member 20b is thus subjected to be scattered in different directions with respect to the light RL incident to the PML member 20b and that emitted out therefrom. Therefore, by projecting the light RL onto the PML member 20b, the intensity of the light RL emitted out therefrom varies accordingly with the optical image of the object O.

The light RL thus emitted out from the PPC 12b can be projected as it is onto a screen through a projection lens, supplied to a photoelectric converter through an optical system to be converted into electric signals, or supplied to an optical recording medium through an optical system to be recorded thereon.

The light source for generating the light RL may be a laser source, an incandescent lamp, an electric discharge lamp and the like. The light RL may be a bundle of beams with any diameter.

As is understood from the foregoing, the image pickup apparatus according to the present invention can be made in a simple configuration and effectively treated compared to conventional apparatus in which a light emitted out from a PPC is converted into the light whose intensity is varying accordingly with an optical image of an object by means of an analyzer.

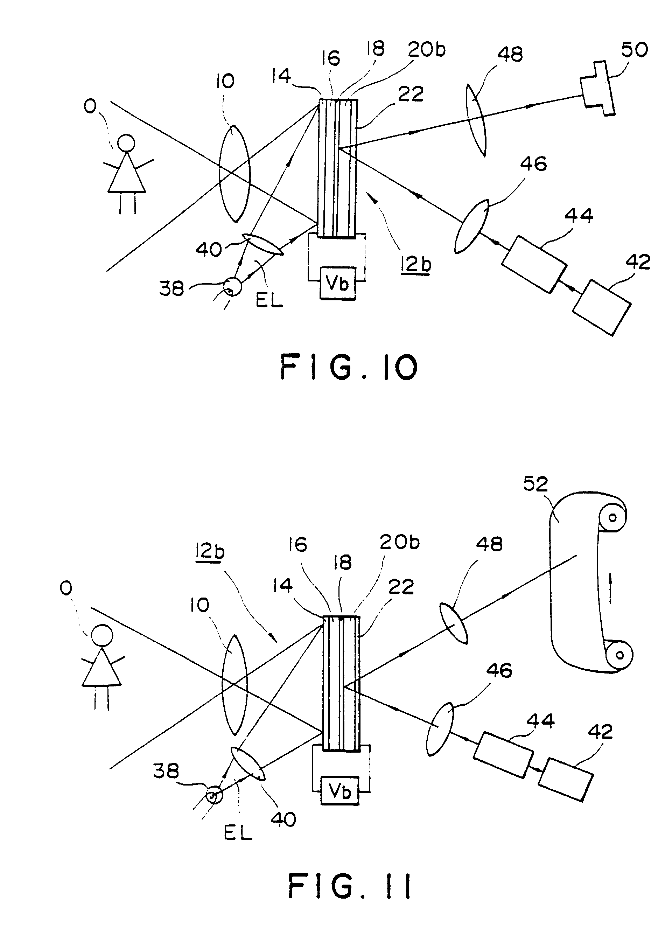

Fig. 10 shows an embodiment in which the light RL emitted out from the PPC 12b shown in Fig. 9 is converted into electric signals corresponding to the optical image of the object O. The writing, reading and erasing operations in Fig. 10 are the same as described with reference to Fig. 9.

In Fig. 10, a laser beam is emitted out from a laser source 42 and deflected by a deflector 44. The laser beam thus reflected is incident to the PPC 12b at the transparent electrode 22 side thereof through a lens 46. The laser beam thus incident to the PPC 12b is then emitted out therefrom at the transparent electrode 22 side thereof in the same manner as described above.

The light RL thus emitted out from the PPC 12b is then supplied to a photoelectric converter 50 through a lens 48. The electric signals corresponding to the optical image of the object O is thus generated from the photoelectric converter 50. Deflection in the deflector 44 depends on the photoelectric converter 50. A phototransistor, a line-image sensor, a two-dimensional-image sensor, etc. may be employed as the photoelectric converter 50.

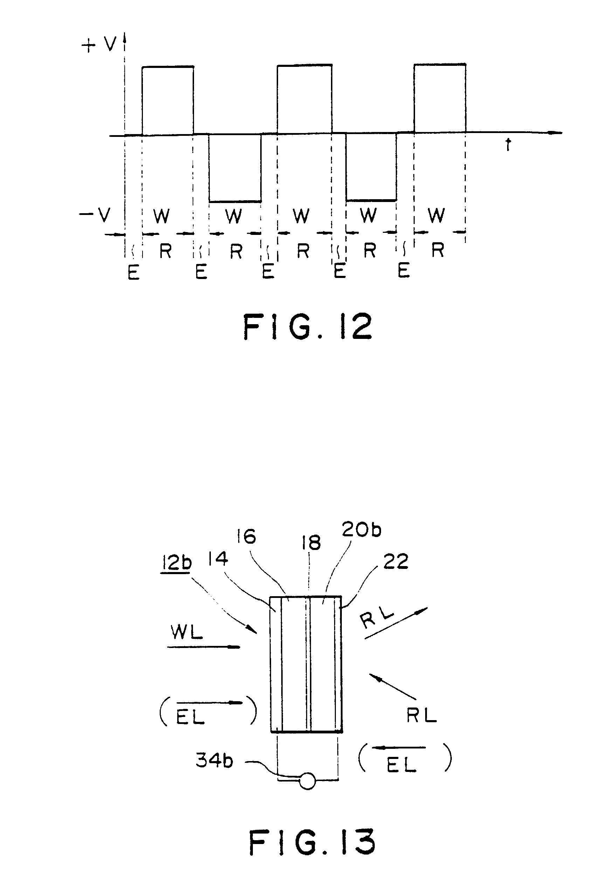

Fig. 11 shows an embodiment in which an optical recording medium 52 such as a photographic film is adopted instead of the photoelectric converter 50 in Fig. 10. A charge image recording medium also can be employed as the optical recording medium 52. In the case of the charge image recording medium without a photoconductive member, a charge image can be recorded on the recording medium by means of a writing device having a photoconductive member.

Fig. 12 is a chart for the explanation to operate the image pickup apparatus in which a polarity of the voltage applied across the transparent electrodes 14 and 22 of the PPC 12b is inverted as +V and -V per image. In Fig. 12, E denotes light for erasing irradiation-period of time, while W and R denote writing- and reading-period of time, respectively.

Fig. 13 shows the configuration in which a voltage being inverted as +V and -V is applied across the transparent electrodes 14 and 22 by a power supply 34b. When continuous d.c. electric field is applied to the composite membrane employed as the PML member 20b, photo-modulation capability thereof is degraded due to ions contained in the liquid crystals. Therefore, such degradation is restricted by means of the power supply 34b.

Next, embodiments of the image pickup apparatus according to the present invention will be explained with reference to Figs. 14 to 17.

A PPC 12c shown in Fig. 14 is composed by laminating in order the transparent electrode 14, the PCL member 16, the dielectric mirror 18, a PML member 20c composed of memory membrane of macromolecular and liquid crystals which is scattered into macromolecular material, the transparent electrode 22 and a heat generation layer 23. The layer acting as the transparent electrode 22 and also the heating layer 23 may be adopted.

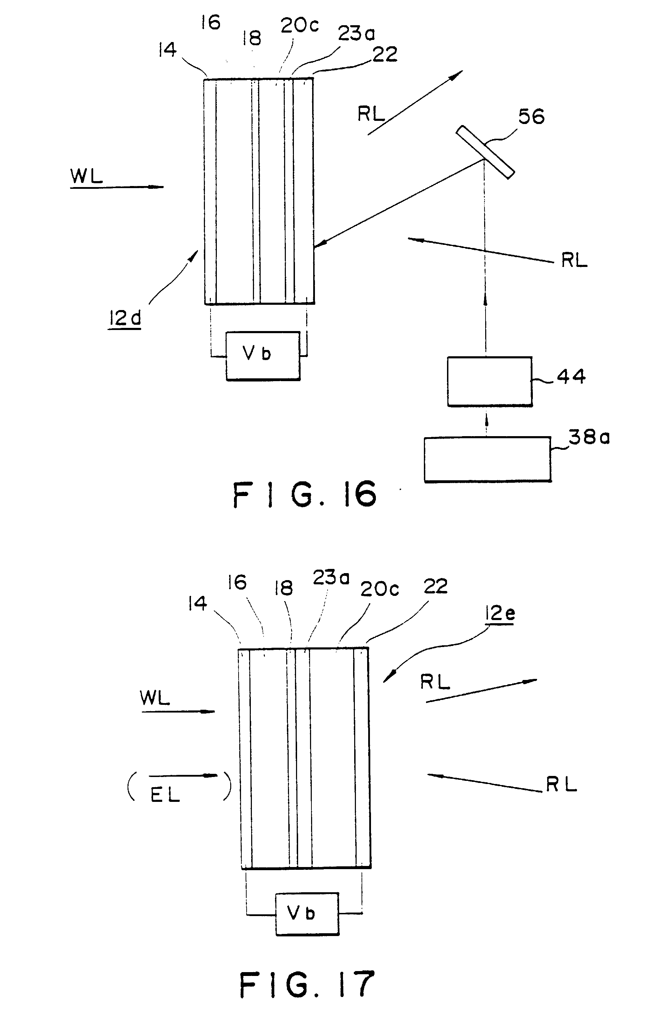

Each of PPC 12d shown in Figs. 15 and 16 is composed by laminating in order the transparent electrode 14, the PCL member 16, the dielectric mirror 18, the PML member 20c, a heat generation layer 23a and the transparent electrode 22.

A PPC 12e shown in Fig. 17 is composed by laminating in order the transparent electrode 14, the PCL member 16, the dielectric mirror 18, the heat generation layer 23a, the PML member 20c and the transparent electrode 22.

There is provided the dielectric mirror 18 between the PCL member 16 and the PML member 20c respectively in Figs. 14 to 16. However, this dielectric mirror 18 can be omitted if the PCL member 16 is composed so as not to sense a light RL and the light RL is reflected at there. The dielectric mirror 18 provided between the PCL member 16 and the PML member 20c in Fig. 17 also can be omitted if either of the PCL member 18 or the heat generation layer 23 is composed so as not to sense a light RL and the light RL is reflected at there.

The heat generation layer 23 provided in the PPC 12c shown in Fig. 14 is heated by power applied by a heating power supply in the case of erasing operation to melt the liquid crystals included in the PML member 20c. While the heat generation layer 23a provided in the PPC 12c shown in Figs. 15 to 17 is heated by an erasing light in the case of erasing operation to melt the liquid crystals included in the PML member 20c.

The memory membrane employed as the PML member 20c is composed like the PML member 20b shown in Fig. 8 that nematic liquid crystals which have the characteristic as the liquid crystal at a room temperature and have high volume resistivity are dispersed in the macromolecular material such as methacrylic resin, polyester resin, polycarbonate resin, polypropylene resin, polystyrene resin and silicon resin, each having volume resistivity of 10¹⁴ Ω-cm or more.

Any types of the liquid crystals can be adopted for composing the PML member 20c if the molecules in the liquid crystals are not arranged in layers but all their axes are parallel at a room temperature. Employment of the liquid crystals having higher volume resistivity and viscosity results in reproduction of information with higher contrast ratio or higher recording performance. The liquid crystals should have lower melting point than that of the macromolecular material.

the memory membrane employed as the PML member 20c has memory function such that once the liquid crystals in the memory membrane are reoriented by applying an electric field thereto, that state is not changed even if the electric field is removed. This is different from the PML member 20c shown in Fig. 8 in which the liquid crystals are reoriented by the electric field applied thereto.

The memory membrane described as above is composed such that liquid crystals are enclosed in innumerable pores randomly distributed in the macromolecular material. The liquid crystals thus cannot freely change their orientation direction. When an electric field is applied thereto to give enough energy to the liquid crystals larger than that of the macromolecular material, the liquid crystals are reoriented. The state of the liquid crystals thus reoriented is subjected to the macromolecular material to maintain the state. Therefore, orientation direction memories the state that the liquid crystals are applied with the electric field. Namely, the memory membrane exhibits memory function. The larger the pores in which the liquid crystals are enclosed, the more difference in orientation among the liquid crystals. This results in degradation in memory function. Accordingly, it is desirable to have pores with a diameter of 0.5 µm or less and uniformly dispersed.

In order to erase the information memorized due to the reorientation, the liquid crystals in the memory membrane are heated to the temperature between the melting point of the liquid crystals and that of the macromolecular material to be melted to exhibit isotropy. The liquid crystals thus melted are cooled down as time lapse to be nematic. The liquid crystal thus be nematic become opaque.

In the image pickup apparatus shown in Fig. 14, a voltage is applied across the two transparent electrodes 14 and 22 to apply an electric field to the PML member 20c and an optical image of an object is projected onto the PCL member 16 carried by a light WL through an imaging lens not shown. The electric resistance of the PCL member 16 varies accordingly with the optical image emitted therein. The charge image corresponding to the optical image is thus generated in the vicinity of the border of the PCL member 16 and the dielectric mirror 18.

Then, the electric field with the intensity distribution corresponding to the charge distribution of the charge image is applied to the PCL member 20c.

The liquid crystals in the PML member 20c are reoriented due to the electric field caused by the charge image corresponding to an electro-magnetic radiation beam. The reoriented state is thus memorized. The memorized reoriented state is maintained even if the charge image generated in the vicinity of the border of the PCL member 16 and the dielectric mirror 18 is erased.

When a light RL is incident to the PPC 12c at the heat generation layer 23 side thereof from a light source not shown in Fig. 14, the light RL reaches the dielectric mirror 18 through the heat generation layer 23, the transparent electrode 22, the PML member 20c. After reflected at there, the light RL is emitted out from the PPC 12c through the PML member 20c, the transparent electrode 22 and the heat generation layer 23.

The light RL thus emitted out from the PPC 12c varies accordingly with the reoriented liquid crystals in the PML member 20c. Therefore, the light RL emitted out from the PPC 12c can be projected as it is onto a screen through a projection lens, supplied to a photoelectric converter through an optical system to be converted into electric signals, or supplied to an optical recording medium through an optical system to be recorded thereon.

As is understood from the foregoing, the image pickup apparatus according to the present invention can be made in a simple configuration and effectively treated compared to conventional apparatus in which a light emitted out from a PPC is converted into the light whose intensity is varying accordingly with an optical image of an object by means of an analyzer.

The light source for generating the light RL may be a laser source, an incandescent lamp, an electric discharge lamp and the like. The light RL may be a bundle of beams with any diameter.

In order to erase information memorized as orientation of the liquid crystals in the PML member 20c, the liquid crystals are heated to the temperature between the melting point of the liquid crystals and that of the macromolecular material to be melted to have the characteristics as the liquid crystal.

In the image pickup apparatus shown in Fig. 14, a heating power is applied from a heating power supply 54 to the heat generation layer 23 of the PPC 12c (A layer acting as the transparent electrode 22 and the heating layer 23 may be provided.) to force the heating layer 23 to generate heat. The PML member 20c is then heated to the temperature between the melting point of the liquid crystals included in the PML member 20c and the macromolecular material included therein to melt the liquid crystals which is to have the characteristics as the liquid crystals.

When the charge image generated in the vicinity of the border of the PCL member 16 and the dielectric mirror 18 (or the PML member 20c if the dielectric mirror 18 is omitted) still remains therein in the case of writing, the charge image should be erased before information-erasing operation at the PML member 20c by way of heating.

In order to erase the charge image, a light for erasing is incident to the PPC 12c at the transparent electrode 14 side thereof from a light source through a lens to lower the electric resistance of the PCL member 16 in the same manner as described with reference to Fig. 9. The two transparent electrodes 14 and 22 may be short-circuited each other, opened or grounded together. This erasing operation is applied to the preferred embodiments shown in Figs. 15 to 17.

Each configuration of PPCs shown in Figs. 15 to 17 is different from that of the PPC 12c shown in Fig. 14. However, reading/writing operations in the image pickup apparatus shown in Figs. 15 to 17 are the same as those described with reference to Fig. 14, erasing operation only being different.

In the case of erasing operation to erase the information memorized as the orientation of the liquid crystals in the PML member 20c shown in Figs. 15 to 17, the heating operation to heat the liquid crystals to the temperature between the melting point of the liquid crystals and that of the macromolecular material by generating heat in the heat generation layer 23a due to irradiation of the light for erasing is different from the erasing operation described with reference to Fig. 14.

The erasing operation in the image pickup apparatus shown in Fig. 15 is carried out by irradiating the heat generation layer 23a with the light from the erasing-light source 38 through the lens 40. In Fig. 16, an erasing-laser light source 38a emits out a light which is deflected by the deflector 44 and reflected at a reflection mirror 56 to be incident to the heat generation layer 23a through the transparent electrode 22. While in Fig. 17, a light is incident to the heat generation layer 23a from an erasing light source not shown through the transparent electrode 14 and the PCL member 16.

The heat generation layer 23a shown in Figs. 15 to 17 may be disposed in any location in the PPCs 12d and 12e if the heat generated therein effectively heat the liquid crystals in the PML member 20c.

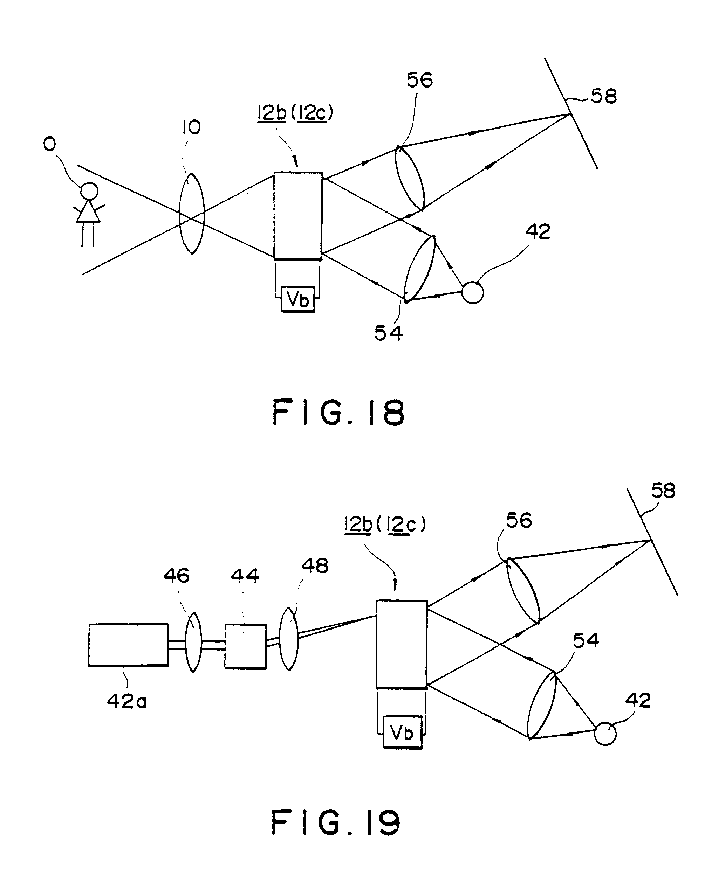

Next, embodiments of the display apparatus according to the present invention will be explained with reference to Figs. 18 to 30.

A display apparatus shown in Fig. 18 is to convert an optical image of an object O to a charge image with high resolution by a PPC 12b (or 12c) and read out the charge image with a light which is modulated and displayed on a screen.

Writing/reading operation of the PPC 12b shown in Fig. 18 is the same as those described with reference to Figs. 8 to 11. A light is incident to the PPC 12b through a collimator lens 54, then the light is emitted out from the PPC 12b as described before. Intensity of the light thus emitted out varies accordingly with that of the light carrying an optical image of an object O and incident to the PPC 12b.

The light thus emitted out is projected onto a screen 58 on which the image of the object is displayed. This results in simplification of the structure of the apparatus and effective usage of light. The image thus displayed becomes intense as the light emitted out from the light source 42 becomes intense. The light source 42 may be a laser light source, an incandescent lamp and an electric discharge lamp, etc. An erasing means is omitted in Fig. 18, however that described before can be applied. (This is also applied to display apparatus shown in Figs. 15 to 25.)

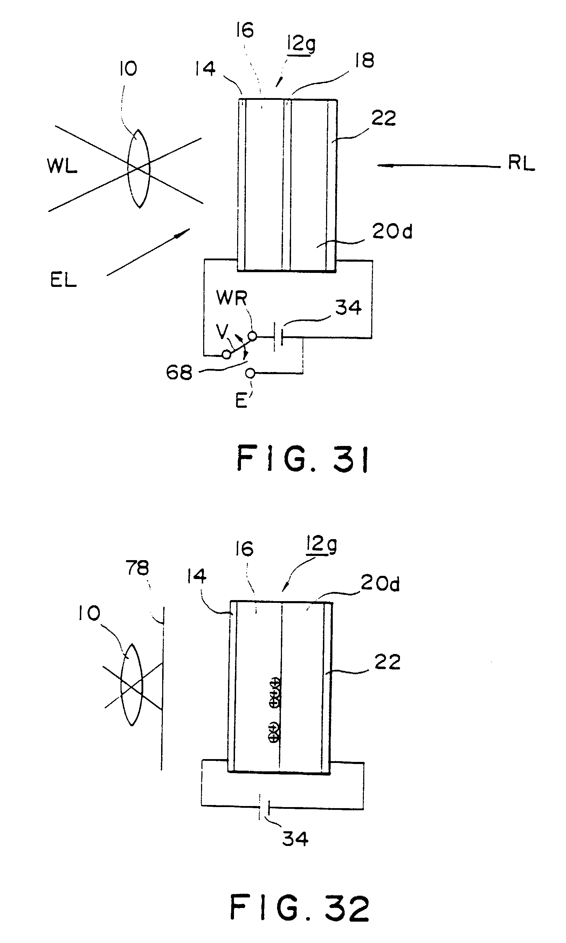

The display apparatus shown in Figs. 15 to 25 will be explained. Writing operation to the PPC 12b is performed by a laser light intensity-modulated by the information which is to be displayed. A PPC 12g shown in Figs. 31 to 35 may be used other than the PPC 12b (or 12c). The PPC 12g includes a PML member of PLZT porcelain in which the degree of scattering of light is repeatedly changed due to an electric field applied thereto.

When a laser light which is intensity-modulated by the information to be displayed and emitted out from a laser light source 42a is incident to the PPC 12b through lenses 46 and 48 and a reflector 44 in Fig. 19, the information carried by the light is recorded in the PPC 12b as described with reference to Figs. 8 to 11. Then, a light emitted out from a light source 42 is incident to the PPC 12b and emitted out therefrom as described with reference to Fig. 18. Intensity of the light thus emitted out is varying accordingly with the electric field due to the charge image generated in the vicinity of the border of the PCL member and other member not shown. Therefore, the light thus emitted out is projected onto a screen 58 through a projection lens 56 and then the optical image of the object is displayed on the screen 58.

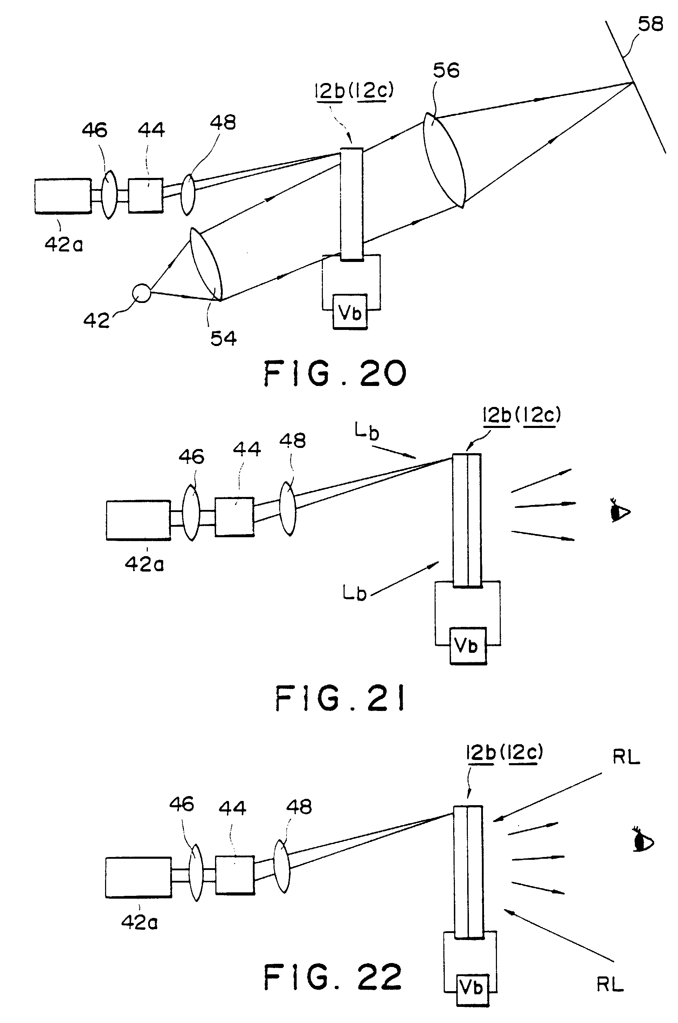

Next, in display apparatus shown in Figs. 20, 21 and 23, each PPC 12b (or 12c) is composed as a light for reading is made pass therethrough. Light for writing and reading are made incident to the PPC 12b in the same direction each other. As for the PPC 12b, not a dielectric mirror which reflects the light for reading but a PCL member not sensitive to the light for reading is employed.

The writing/reading operation shown in Fig. 20 is the same as that described with reference to Fig. 19.

Fig. 21 shows the case that a back light Lb is radiated to the PPC 12b as a light for reading instead of the light source 42 shown in Fig. 20. The light emitted out from the PPC 12b at the opposite side thereof is directly watched.

Fig. 22 shows the case that a PPC 12b (or 12c) is composed as a reflection type the same as that shown in Fig. 19. Writing operation is the same as that described before. A light RL is radiated to the PPC 12b at the opposite side thereof. Light emitted out from the PPC 12b at the opposite side thereof is directly watched.

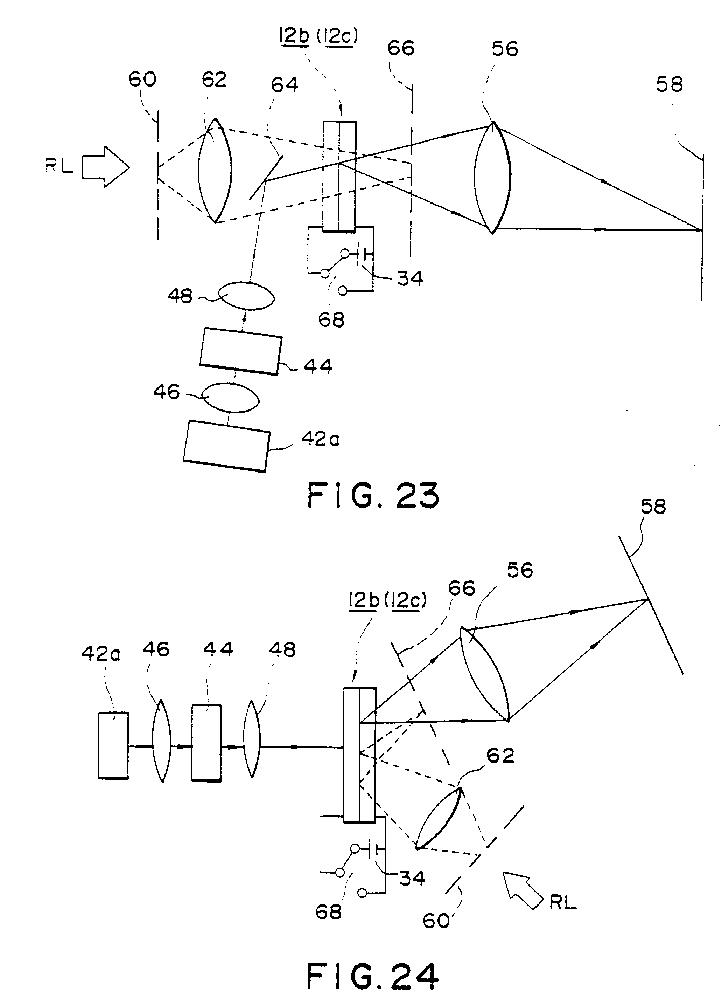

Figs. 23 and 24 show display apparatus employing the schlieren method for reading the information written in a PPC 12b (or 12c).

In Fig. 23, a laser light which is intensity-modulated by information to be displayed and emitted out from a laser light source 42a is deflected by a deflector 44 and reflected at a dichroic mirror 64 to be incident to the PPC 12b and writes the information therein.

There are provided a d.c. power supply 34 and a switch 68 in Figs. 23 and 24. A movable contact of the switch 68 is switched to the d.c. power supply 34 to apply a voltage to two transparent electrodes not shown and provided in the PPC 12b in the case of writing operation. While, the transparent electrodes are shorted each other by switching off the movable contact.

The display apparatus shown in Fig. 23 is provided with a transparent type PPC 12b (or 12c). Writing operation is the same as that described with reference to Figs. 19 to 22. A light RL is incident to the PPC 12b through a mask 60 and a lens 62.

The light RL thus incident is emitted out from the PPC 12b at the opposite side thereof through a schlieren output mask 66 and a projection lens 56 and then projected onto a screen 58 on which information is displayed. These masks 60 and 66 comprise an optical system of the schlieren method.

The display apparatus shown in Fig. 24 is provided with a reflection type PPC 12b (or 12c). Writing operation is the same as that described with reference to Figs. 9 to 22. A light RL is incident to the PPC 12b through a schlieren input mask 60 and a lens 62 at the opposite side. Displaying operation is the same as that described with reference to Fig. 23.

When the charge image generated in the vicinity of the border of the PCL member and other member in the PPC 12b, the PPC 12b scatters light incident therein. Thus, intensity of the light passing through the mask 66, is varying accordingly with an optical image of an object. Then, the light modulated by the charge image, is emitted out from the PPC 12b.

Therefore, compared to a conventional photo-to-photo transducer wherein light emitted out from the transducer is converted to the light whose intensity is varying by an analyzer, the display apparatus according to the present invention effectively treat light. Furthermore, a light RL may be incident to the PPC 12b from the direction other than a normal line so that, such as, a semi-transparent mirror and a deflected beam splitter are eliminated from the optical path of the light RL. This results in the display apparatus made compact. This is also applied to image pickup apparatus described hereinafter.

However, such as in Figs. 18 and 19, when a light is incident to the PPC 12b from the direction other than a normal line of the PPC 12b and then emitted out therefrom as the light whose intensity is varying accordingly with the optical image of the object to be projected onto the screen 58 through the lens 56, the light is not uniformly focused on entire portion of the screen 58 and magnification is also different from each other on each portion of the screen 58.

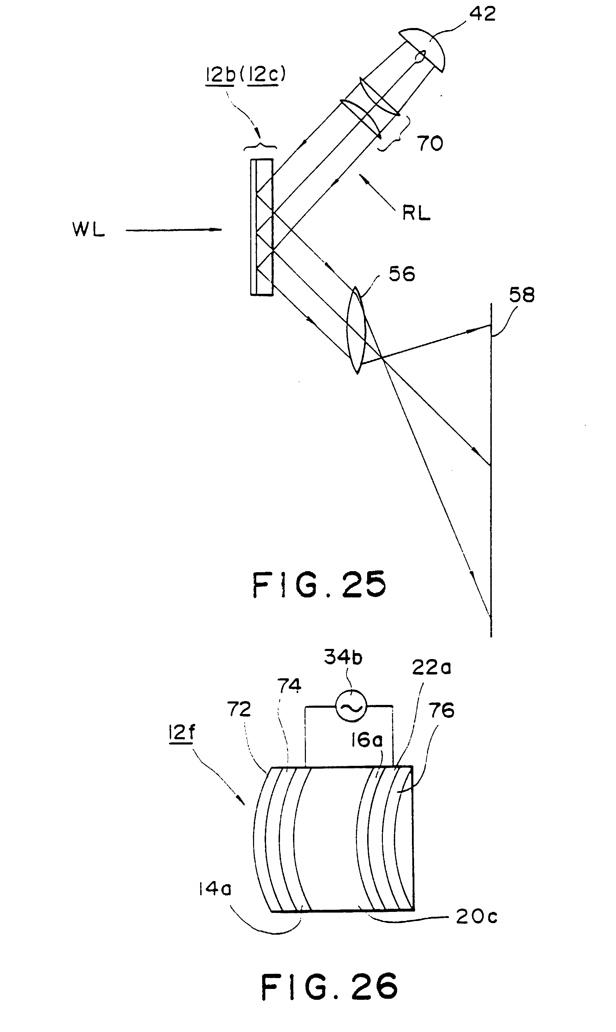

Fig. 25 shows the case that same magnification is obtained over the screen 58 and also an image preferably projected thereon. A PPC 12b (or 12c), a projection lens 56 and the screen 58 are so arranged that the focusing plane of the PPC 12b, the main plane of the projection lens 56 and the screen 58 are parallel to each other and also the center of the focus plane of the PPC 12b, the main point of the projection lens 56 and the center of the screen 58 are aligned.

Under the state as above, when a light RL is incident to the PPC 12b through a condenser lens 70 even in inclined direction, a preferable image with same magnification is projected over the screen 58.

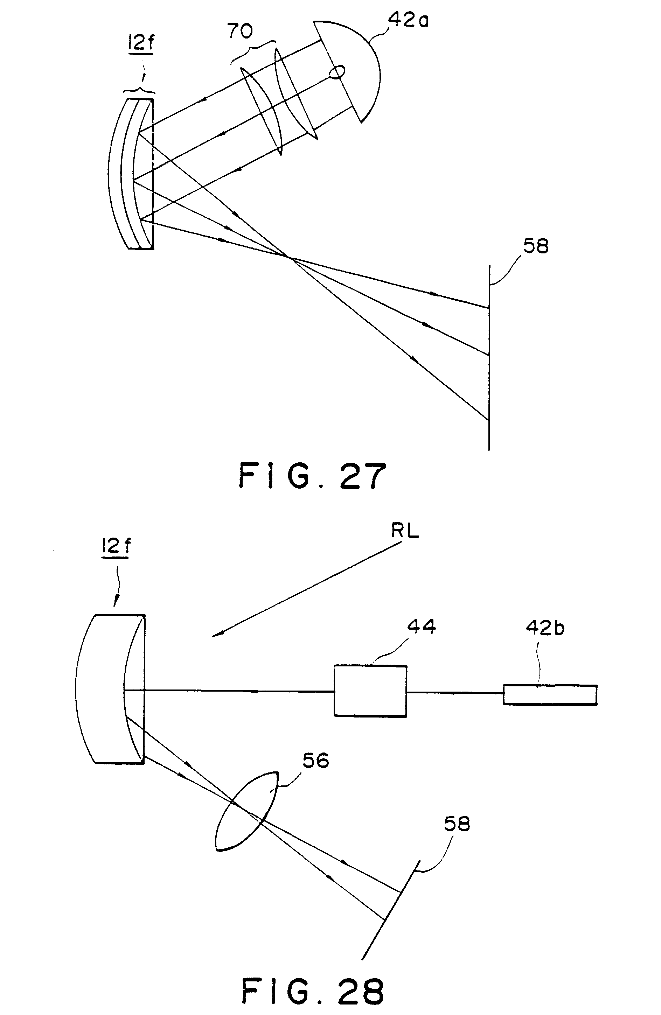

Fig. 26 shows a PPC 12f whose light incident and emitting planes are formed in curvature. The PPC 12f is composed by laminating, in order, a supporting substrate 72, a reflecting mirror 74, a transparent electrode 14a, a PML member 20c, a PCL member 16a, a transparent electrode 22a and a supporting substrate 76. The supporting substrates 72 and 76 are such as a glass plate. The curvature may be such as a part of spherical surface, rolling elliptical surface and cylindrical surface, which simplify the configuration of the PPC 12f. The PPC 12f shown in Fig. 26 having concave mirror-shaped planes is capable of focusing an image onto a screen 58 without a projection lens as shown in Fig. 27.

In Fig. 27, when a light emitted from a light source 42a is incident to the PPC 12f through a condenser lens 70, the light is intensity-modulated while reciprocally transferring in a PML member in the PPC 12f and is emitted out therefrom to be focused on the screen 58.

Fig. 28 shows a display apparatus in which light for reading and writing are incident to a PPC 12f having a concave mirror-shaped planes from the same direction. A PCL member included in the PPC 12f is composed so as to sense a light in the range of writing light but not reading.

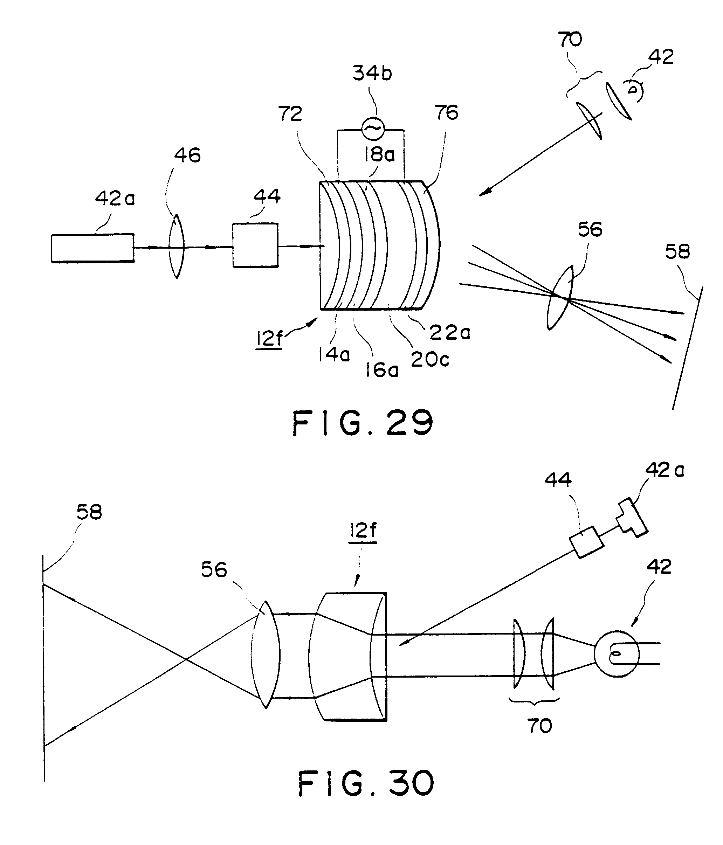

Fig. 29 shows a display apparatus in which a light for writing is incident to a PPC 12f at concave side thereof whereas a light for reading convex side thereof.

Fig. 30 shows a display apparatus in which light for reading and writing are incident to a PPC 12f at concave side thereof and the light for reading is emitted out therefrom at convex side thereof to be focused onto a screen 58 through a projection lens 56. A PCL member included in the PPC 12f is composed so as to sense a light in the range of writing but not reading.

The followings are the combination of direction from where light for reading and writing are incident to the PPC 12f other than the preferred embodiments described above:
(1) a light for writing at convex side and a light for reading concave side of the PPC 12f if reflection type.
(2) a light for writing at convex side and a light for reading concave side of the PPC 12f, both convex side or concave side thereof if transparent type.
The light source 42 and 42a may be a light emitting diode (LED) other than the laser light source.

Next, an image pickup apparatus employing a PPC having a PCL member and a PML member composed of a PLZT porcelain in which the state of dispersed light is repeatedly changed due to an electric field applied thereto between two electrodes will be explained with reference to Figs. 31 to 35.

In Fig. 31, a light WL carrying an optical image of an object is incident to a PPC 12g through a lens 10 and then focused onto a PCL member 16 under the state that an electric field is applied across the PCL member 16 by applying a d.c. voltage across transparent electrodes 14 and 22 from a d.c. power supply 34 through a movable contact v and a fixed contact WR of a switch 68. The electric resistance of the PCL member 16 then varies accordingly with the optical image. There is thus generated a charge image in the vicinity of the border of PCL member 16 and a dielectric mirror 18.

An electric field with intensity distribution corresponding to the optical image is applied to a PML member 20d of PLZT porcelain in which the degree of scattering of light is repeatedly changed thereby. The refractive index of the PML member 20d is therefore varies accordingly with the generated charge image due to electrooptic effect.

When a light RL is incident to the PPC 12g at the transparent electrode 22 side, the light WL carries image information varying accordingly with the intensity distribution of the electric field applied to the PML member 20d while reciprocally transferring therein. An optical image corresponding to that carried by the light WL is therefore generated on the transparent electrode 22 side.

A dielectric mirror 18 reflects the light RL which is incident to the PML member 20d so as not to let the light RL pass therethrough to reach the PCL member 16. This prevents the charge image generated in the vicinity of the border of the PCL member 16 and the dielectric mirror 18 from being degraded.

A light EL with uniform intensity distribution is incident to the PPC 12g at the transparent electrode 14 side to erase the information written in the PPC 12f as the charge image under the state that the movable contact v of the switch 68 is switched to a fixed contact E so as to erase the electric field applied across the transparent electrodes 14 and 22.

Fig. 32 shows an image pickup apparatus having an optical shutter 78 for preventing light passing through a lens 10 from being incident to a PPC 12g. The optical shutter 78 is opened to focus an optical image of an object onto a PCL member 16 in a PPC 12g, then is closed so as to maintain charge image generated in the vicinity of the border of the PCL member 16 and a dielectric mirror not shown for a long period of time.

The optical shutter 78 is further intermittently opened to focus the optical image of the object onto the PCL member 16 in the PPC 12g to generate charge image in the vicinity of the border of the PCL member 16 and the dielectric mirror and the image information written in the PPC 12g as the charge image is read out by scanning.

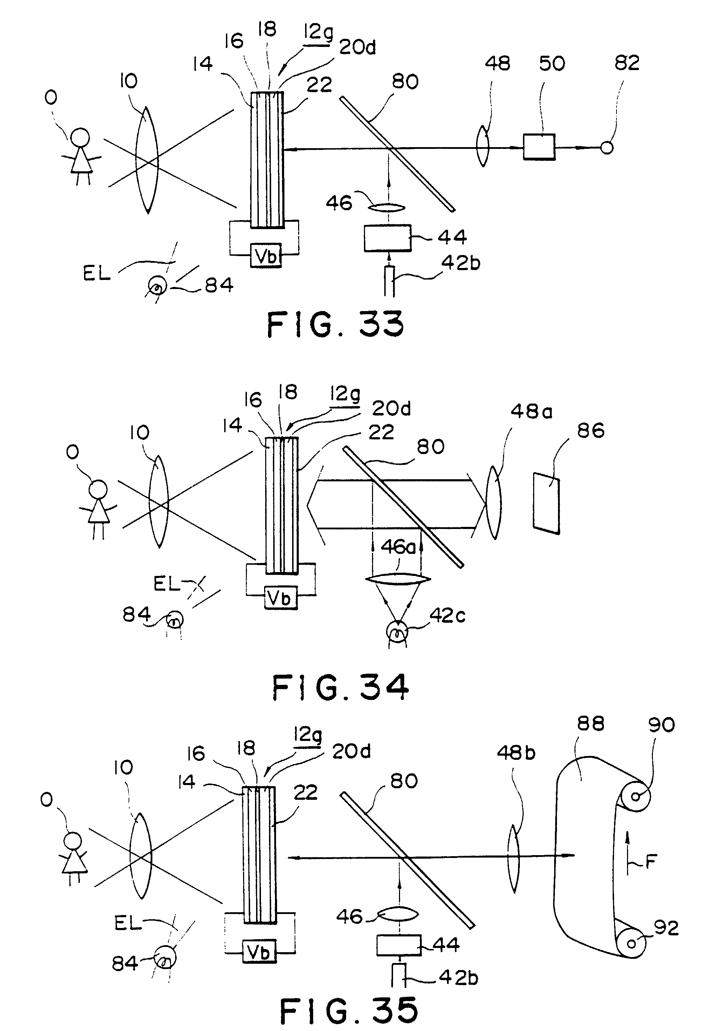

In an image pickup apparatus shown in Fig. 33, writing operation is the same as that described above. A light as a light RL emitted out from a laser source 42b is deflected by a deflector 44 and then incident to a PPC 12g at a transparent electrode 22 side through a lens 46 and a beam splitter 80 so as to read a charge image generated in the vicinity of the border of a PCL member 16 and a dielectric mirror 18.

The light RL is then emitted out from the PPC 12g at the transparent electrode 22 side to be applied to a photoelectric converter 50 through a lens 48 and the beam splitter 80 in which the light RL is converted into a video signal to be applied to an output terminal 82.

As for the photo-electric converter 50, such as a photo diode and an one-dimension image sensor are employed. The light RL emitted out from the lens 48 may be applied, as it is, to an optical signal processor for desired signal processing without photoelectric conversion. This is also applied to an image pickup apparatus shown in Fig. 34. Erasing operation is performed by radiating an erasing light EL by a light source 84. This is also applied to image pickup apparatus shown in Figs. 34 and 35.

In an image pickup apparatus shown in Fig. 34, writing operation is the same as that described above. A light RL emitted out from a light source 42c is made as a light with a large diameter by a lens 46a and incident to a PPC 12g at a transparent electrode 22 side through a beam splitter 80 so as to read a charge image generated in the vicinity of the border of a PCL member 16 and a dielectric mirror 18. The light with the large diameter is emitted out from the PPC 12g at the transparent electrode 22 side and then applied to a two dimensional image sensor 86 through the beam splitter 80 and a lens 48a to be converted into a video signal.

In an image pickup apparatus shown in Fig. 35, writing operation is the same as that described above. A light RL emitted out from a laser light source 42b is reflected by a deflector 44 and incident to a PPC 12g at a transparent electrode 22 side through a lens 46 and a beam splitter 80 so as to read a charge image generated in the vicinity of the border of a PCL member 16 and a dielectric mirror 18.

The light is then emitted out from the PPC 12g at the transparent electrode 22 and focused onto a recording medium 88 and recorded therein through the beam splitter 80 and a lens 48b. The recording medium 88 provided with reels 90 and 92 transfers in the direction depicted by an arrow mark F.

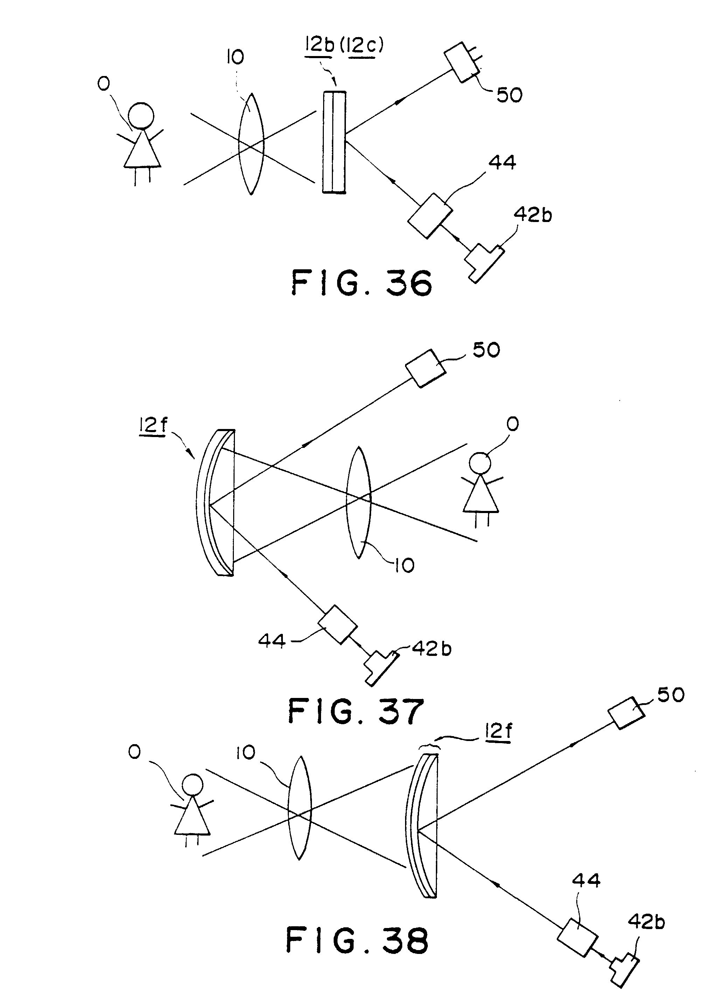

Figs. 36 to 38 show image pickup apparatus in which a reading light is incident to a PPC from the direction other than a normal line thereof.

Fig. 36 is the case that a light for reading emitted out from a laser light source 42b is deflected by a deflector 44 and incident to a PPC 12b (or 12c) at an opposite side to where a light for writing is incident and from the direction other than the normal line of the PPC 12b. This results in no semi-transparent mirror provided in an optical path of the light for reading. Therefore, the apparatus is made simplified and utilization of the light for reading is improved. Another light source may be applied instead of the laser light source 42b. Furthermore, a light for reading with large diameter may be radiated onto the PPC 12b, other than scanning a light beam, to obtain a video signal by a two-dimensional image sensor.

Each PPC 12f shown in Figs. 37 and 38 is provided with a concave mirror-shaped surface. Fig. 37 shows the case that light for reading and writing are incident to the PPC 12f in the same direction. A PCL member not shown included in the PPC 12f is composed such that it senses light in the range of writing whereas not reading. Fig. 38 shows the case that a light for writing is incident to a PPC 12f at a convex side and a light for reading concave side.

## Claims

1. A photo-to-photo transducer, comprising:
a first electrode (14) through which an electromagnetic radiation beam for writing information is passed;
a photo-conductive layer member (16) whose impedance varies to generate electric charges under the presence of a specific voltage when the beam thus passed is incident thereto;
a photo-modulation layer member (20a) having an operation threshold level and performing photo-modulation subject to the electric charges in the vicinity of the threshold level when applied with the specific voltage corresponding to a black level of the electromagnetic beam for writing information;
a second electrode (22) through which an electro-magnetic radiation beam for reading the information to be subjected to the photo-modulation is passed, wherein the first electrode, photo-conductive layer member, photo-modulation layer member and second electrode are laminated in order; and
means for applying a voltage corresponding to the black level of the electromagnetic beam for writing information, across the first and second electrodes so that the specific voltage is applied to the photo-conductive layer member (16) and the photo-modulation layer member (20a) respectively.

2. A photo-to-photo transducer according to Claim 1, wherein surfaces of the first and second electrodes (14 and 22) are formed in the shape of a curve.

3. A photo-to-photo transducer according to Claim 1, further comprising a heat generation layer member (23) for generating heat when a voltage is applied thereto to melt the photo-modulation layer member (20a).

4. An image pick-up apparatus, comprising:
a photo-to-photo transducer (12b) composed by laminating a photo-conductive layer member (16) and a photo-modulation layer member (20a) having an operation threshold level between first and second transparent electrodes;
first projection means (42a) for projecting an electro-magnetic radiation beam for writing information onto the photo-conductive layer member through the electrode at the side thereof, the impedance of the photo-conductive layer member varying to generate electric charges corresponding to the beam for writing information under a presence of a specific voltage;
second projection means (42) for projecting an electro-magnetic radiation beam for reading the information onto the photo-modulation layer member through the electrode at the side thereof, the photo-modulation layer member performing photo-modulation subject to the electric charges in the vicinity of the threshold level when the specific voltage corresponding to a black level of the electromagnetic beam for writing information is applied thereto; and
means for applying a voltage across the first and second electrodes so that the specific voltage corresponding to the black level of the electromagnetic beam for writing information is applied to the photo-conductive layer member (16) and the photo-modulation layer member (20a) respectively.

5. An image pick-up apparatus according to Claim 4, further comprising:
taking means (56) for taking out the beam thus projected onto the photo-modulation layer member; and
display means (58) for displaying the beam thus taken out thereon.

6. An image pick-up apparatus according to Claim 5, further comprising erasing means (84) for erasing the information to be written.

7. An image pick-up apparatus according to Claim 4, 5 or 6 wherein the photo-to-photo transducer (126) further comprises a heat generation layer member (23) for generating heat when a voltage is applied thereto to melt the photo-modulation layer member (20a).

8. An image pick-up apparatus according to Claim 4, 5 or 6 wherein the photo-to-photo transducer further comprises a heat generation layer member (23a) for generating heat when an electromagnetic radiation beam for erasing the information is incident thereon to melt the photo-modulation layer member (20a).

## Patentansprüche

1. Ein opto-optischer Wandler, aufweisend:
eine erste Elektrode (14) durch die ein elektromagnetisches Strahlenbündel, welches Information schreibt, hindurchgeht;
eine Photowiderstandsschicht (16), deren Impedanz durch Einstrahlung des schreibenden Strahlenbündels variiert und dadurch in Gegenwart einer spezifischen Spannung elektrische Ladungen erzeugt;
eine optische Modulatorschicht (20a), die einen Ansprechschwellwert aufweist und eine optische Modulation abhängig von den elektrischen Ladungen in der Nähe des Schwellwerts leistet, wenn eine spezifische Spannung entsprechend dem Schwarzpegel des schreibenden Strahlenbündels angelegt wird;
eine zweite Elektrode (22) durch die ein elektromagnetisches Strahlenbündel, welches die Information ausliest und hierzu der Photomodulation unterworfen wird, hindurchgeht, wobei die erste Elektrode, die Photowiderstandsschicht, die optische Modulatorschicht und die zweite Elektrode in dieser Reihenfolge geschichtet sind; und
Einrichtungen zum Anlegen einer dem Schwarzpegel des schreibenden Strahlenbündels entsprechenden Spannung zwischen der ersten und zweiten Elektrode, so daß dementsprechend die spezifische Spannung an der Photowiderstandsschicht (16) und der optische Modulatorschicht (20a) anliegt;

2. Ein opto-optischer Wandler nach Anspruch 1, wobei die Oberflächen der ersten und zweiten Elektrode (14 und 22)in Kurvenform gestaltet sind.

3. Ein opto-optischer Wandler nach Anspruch 1, der zusätzlich eine wärmeerzeugende Schicht (23) zur Aufschmelzung der optischen Modulatorschicht (20a) aufweist, die Wärme erzeugt, wenn an diese eine Spannung angelegt wird.

4. Ein Aufnahmegerät, enthaltend:
einen opto-optischen Wandler (12b) bestehend aus einem schichtweisen Aufbau einer Photowiderstandsschicht (16) und einer optischen Modulatorschicht mit Ansprechschwellwert (20a) zwischen einer ersten und einer zweiten transparenten Elektrode;
eine erste Projektionseinrichtung (42) zum Projizieren eines elektromagnetischen Strahlenbündels, welches die Information auf die Photowiderstandsschicht durch die Elektrode auf deren Seiten schreibt, so daß die Impedanz der Widerstandsschicht in Abhängigkeit des schreibenden Strahlenbündels variiert und dadurch bei Anwesenheit einer spezifischen Spannung elektrische Ladungen erzeugt werden;
eine zweite Projektionseinrichtung (42), zum Projizieren eines elektromagnetischen Strahlenbündels, welches die Information liest, auf die optische Modulatorschicht, durch die Elektrode auf deren Seite, so daß die optische Modulatorschicht eine optische Modulation in Abhängigkeit von den elektrischen Ladungen in der Nähe des Ansprechschwellwertes leistet, wenn die spezifische Spannung entsprechend eines Schwarzpegels des schreibenden Strahlenbündels an dieser anliegt; und
Einrichtungen zum Anlegen einer dem Schwarzpegel des schreibenden Strahlenbündels entsprechenden Spannung zwischen der ersten und zweiten Elektrode, so daß dementsprechend die spezifische Spannung an der Photowiderstandsschicht (16) und der optischen Modulatorschicht (20a) anliegt.

5. Ein Bildaufnahmegerät nach Anspruch 4, des weiteren aufweisend:
Aufnahmeeinrichtungen (56), zum Herausleiten des Strahlenbündels nach der Projektion auf die Modulatorschicht; und
Einrichtungen (58) zur Anzeige des herausgeleiteten Strahlenbündels.

6. Ein Bildaufnahmegerät nach Anspruch 5, des weiteren aufweisend eine Einrichtung (84) zum Löschen von Informationen, die geschrieben wurden.

7. Ein Bildaufnahmegerät nach Anspruch 4, 5 oder 6, indem der opto-optische Wandler (126) des weiteren eine wärmeerzeugende Schicht (23) zum Aufschmelzen der optischen Modulatorsschicht aufweist, die Wärme erzeugt, wenn an diese eine Spannung anlegt wird.

8. Ein Bildaufnahmegerät nach Anspruch 4, 5 oder 6, indem der opto-optische Wandler des weiteren eine wärmeerzeugende Schicht (23a) zum Aufschmelzen der optischen Modulatorschicht aufweist, die Wärme erzeugt, wenn ein elektomagnetisches Strahlenbündel zum Löschen der Information auf diese auftrifft.

## Revendications

1. Transducteur opto-optique comprenant :
une première électrode (14) traversée par un faisceau de rayonnement électromagnétique destiné à écrire des informations ;
un élément de couche photoconductrice (16) dont l'impédance varie pour générer des charges électriques en présence d'une tension spécifique lorsque le faisceau ainsi transmis le frappe ;
un élément de couche de photomodulation (20a) ayant un niveau de seuil de fonctionnement et effectuant une photomodulation, soumis aux charges électriques au voisinage du niveau de seuil lorsqsu'il reçoit la tension spécifique correspondant à un niveau de noir du faisceau électromagnétique destiné à écrire des informations ;
une deuxième électrode (22) traversée par un faisceau de rayonnement électromagnétique destiné à lire les informations, destinée à être soumise à la photomodulation, dans lequel la première électrode, l'élément de couche photoconductrice, l'élément de couche de photomodulation et la deuxième électrode sont stratifiées dans cet ordre ; et
des moyens pour appliquer une tension correspondant au niveau de noir du faisceau électromagnétique destiné à écrire des informations, aux bornes des première et deuxième électrodes, de façon que la tension spécifique soit respectivement appliquée à l'élément de couche photoconductrice (16) et à l'élément de couche de photomodulation (20a).

2. Transducteur opto-optique selon la revendication 1, dans lequel les surfaces de la première et de la deuxième électrodes (14 et 22) sont réalisées sous la forme d'une courbe.

3. Transducteur opto-optique selon la revendication 1, comprenant en outre un élément de couche de génération de chaleur (23) destiné à générer de la chaleur lorsqu'une tension y est appliquée, pour faire fondre l'élément de couche de photomodulation (20a).

4. Dispositif de prise d'images comprenant :
un transducteur opto-optique (12b) constitué par le dépôt d'un élément de couche photoconductrice (16) et d'un élément de couche de photomodulation (20a) ayant un niveau de seuil de fonctionnement, entre une première et une deuxième électrode transparentes ;
des premiers moyens de projection (42a) pour projeter un faisceau de rayonnement électromagnétique destiné à écrire des informations sur l'élément de couche photoconductrice à travers l'électrode sur son côté, l'impédance de l'élément de couche photoconductrice variant de manière à générer des charges électriques correspondant au faisceau destiné à écrire des informations en présence d'une tension spécifique ;
des deuxièmes moyens de projection (42) pour projeter un faisceau de rayonnement électromagnétique destiné à lire les informations sur l'élément de couche de photomodulation à travers l'électrode sur son côté, l'élément de couche de photomodulation effectuant une photomodulation étant soumis aux charges électriques au voisinage du niveau de seuil lorsque la tension spécifique correspondant à un niveau de noir du faisceau électromagnétique destiné à écrire des informations y est appliquée ; et
des moyens pour appliquer une tension aux bornes des première et deuxième électrodes de façon que la tension spécifique correspondant au niveau de noir du faisceau électromagnétique destiné à écrire des informations soit respectivement appliquée à l'élément de couche photoconductrice (16) et à l'élément de couche de photomodulation (20a).

5. Dispositif de prise d'images selon la revendication 4, comprenant en outre :
des moyens d'extraction (56) destinés à extraire le faisceau ainsi projeté sur l'élément de couche de photomodulation ; et
des moyens d'affichage (58) destinés à afficher le faisceau ainsi extrait sur ceux-ci.

6. Dispositif de prise d'images selon la revendication 5, comprenant en outre des moyens d'effacement (84) destinés à effacer les informations à écrire.

7. Dispositif de prise d'images selon la revendication 4, 5 ou 6, dans lequel le transducteur opto-optique (126) comprend en outre un élément de couche de génération de chaleur (23) destiné à générer de la chaleur lorsqu'une tension y est appliquée pour faire fondre l'élément de couche de photomodulation (20a).

8. Dispositif de prise d'images selon la revendication 4, 5 ou 6, dans lequel le convertisseur opto-optique comprend en outre un élément de couche de génération de chaleur (23a) destiné à générer de la chaleur lorsqu'un faisceau de rayonnement électromagnétique destiné à effacer les informations le frappe pour faire fondre l'élément de couche de photomodulation (20a).
